# EUROPEAN PATENT APPLICATION

(11) **EP 4 764 911 A1**
(43) Date of publication of application: **24.06.2026**
(21) Application number: 25222693.1
(22) Date of filing: 11.12.2025
(51) Int. Cl.: G06F 21/31, G06F 21/64, H04L 9/40

(54) **MESSAGING VERIFICATION USING DETECTED EVENTS FROM A DEVICE**

(30) Priority: 19.12.2024 US 202463736453 P; 05.12.2025 US 202519411027
(71) Applicant: Meta Platforms, Inc., Menlo Park, CA 94025 (US)
(72) Inventor: Dunn, Lachlan, Menlo Park (US)
(74) Representative: Murgitroyd & Company

(57) **Abstract**

A system and method to verify a communication may include receiving sensor data from a sensor of a first device in accordance with a communication being generated using an application executed on the first device. The method may also include determining, based on the sensor data, whether the communication is generated by a human source. The method may further include generating a label indicating whether the communication is generated by the human source.

## Description

### TECHNICAL FIELD

This application is directed to verification of communication, and more particularly, to using components (e.g., sensors) of devices to verify whether communication is generated by a human or a non-human.

### BACKGROUND

Generative artificial intelligence (Al) systems and large language models (LLMs) are increasingly used to produce text, including in contexts such as conversational interfaces and messaging platforms. These technologies may interact with users through text-based communication in a manner similar to human participants. Various techniques, such as Completely Automated Public Turing tests to tell Computers and Humans Apart (CAPTCHA), have been developed to distinguish between human-generated and automated digital interactions.

### SUMMARY

The following application is directed to determining whether communication is generated by a human. When a user is interacting with an application (e.g., messenger service) to communicate with another entity, various events from, or to a device, in use by the other entity/device may be utilized to determine whether the other entity is a human or a non-human. For example, a sensor in the other entity/device may detect movement of the other entity/device, indicating that a human is causing the movement to the other entity/device while generating communication.

According to a first aspect, there is provided a method for verifying a communication, the method comprising: receiving respective sensor data from one or more sensors of a first device in accordance with a communication being generated using an application executed on the first device; determining, based on the respective sensor data, whether the communication is generated by a human source; and generating a label indicating whether the communication is generated by the human source.

The communication may comprise a text-based input or an audio-based input.

The method may further comprise: transmitting, to a second device, the communication; and transmitting, to the second device, the label indicating whether the communication is generated by the human source.

One sensor of the one or more sensors may comprise a motion sensor of the first device. The respective sensor data associated with the motion sensor may comprise movement data of the first device.

One sensor of the one or more sensors may comprise a touch input sensor associated with a display of the first device. The respective sensor data associated with the touch input sensor may comprise touch input data.

One sensor of the one or more sensors may comprise a microphone of the first device. The respective sensor data associated with the microphone may comprise audio data.

The method may further comprise: combining, via a machine learning model, the respective sensor data to generate a fused feature set. The determining may be based on the fused feature set.

According to a second aspect, there is provided an apparatus to verify a communication, comprising: one or more processors; and one or more memories coupled with the one or more processors and storing processor-executable code that, when executed by the one or more processors, is configured to cause the apparatus to carry out the method of the first aspect.

According to a third aspect, there is provided a computer-readable medium having program code recorded thereon for verifying a communication, the program code when executed by one or more processors of a computing device cause the computing device to carry out the method of the first aspect. The medium may be non-transitory.

According to a fourth aspect, there is provided a computer program product comprising instructions for verifying a communication, the instructions when executed by one or more processors of a computing device cause the computing device to carry out the method of the first aspect.

Other aspects of the present disclosure are directed to a device that includes one or more processors and one or more memories coupled to the one or more processors. The memory stores processor-executable code that, when executed by the one or more processors, causes the device to receive respective sensor data from one or more sensors of the device in accordance with a communication being generated using an application executed on the device. Execution of the processor-executable code further causes the device to determine, based on the respective sensor data, whether the communication is generated by a human source and to generate a label indicating whether the communication is generated by the human source.

In an example, a method includes identifying a communication received from an application running on a first device. The method further includes obtaining, from the first device, data generated based on a sensor of the first device, wherein the sensor is configured to detect an event at the first device. The method further determines, based on the event, whether the communication is generated by a human source.

In another example, an apparatus includes one or more processors. The apparatus further candles at least one memory storing instructions, that when executed by the one or more processors, cause the one or more processors to: identify a communication received from an application running on a device; obtain, from the device, data generated based on a sensor of the device, wherein the sensor is configured to detect an event to the device; and determine, based on the event, whether the communication is generated by a human source.

In another example, a non-transitory computer-readable medium storing instructions that, when executed, cause: identifying a communication received from an application running on a first device; obtaining, from the first device, data generated based on a sensor of the first device, wherein the sensor is configured to detect an event to the first device; and determining, based on the event, whether the communication is generated by a human source.

### BRIEF DESCRIPTION OF THE DRAWINGS

Certain features of the subject technology are set forth in the appended claims. However, for purpose of explanation, several examples of the subject technology are set forth in the following figures.
FIGS. 1 and 2 illustrate examples of an artificial reality system, in accordance with aspects of the present disclosure.
FIG. 3 illustrates an example of electronic devices providing two-way communication, in accordance with aspects of the present disclosure.
FIG. 4 illustrates an example flowchart illustrating a process for determining whether communication from a device is generated by a human source or a non-human source, in accordance with aspects of the present disclosure.
FIG. 5 illustrates an example of a machine learning framework including machine learning model(s) and a training database, in accordance with one or more examples of the present disclosure.
FIG. 6 illustrates a block diagram of an exemplary system, in accordance with various aspects of the present disclosure.
FIG. 7 illustrates a block diagram of an exemplary hardware/software architecture of a communication device, in accordance with various aspects of the present disclosure.
FIG. 8 is a block diagram of an exemplary computing system, in accordance with various aspects of the present disclosure.
FIG. 9 illustrates a flowchart illustrating an example of a process for verifying a communication, in accordance with aspects of the present disclosure.

### DETAILED DESCRIPTION

Some examples of the present disclosure will now be described more fully hereinafter with reference to the accompanying drawings, in which some, but not all examples of the disclosure are shown. Indeed, various examples of the disclosure may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the disclosure. Moreover, the term "exemplary," as used herein, is not provided to convey any qualitative assessment, but instead merely to convey an illustration of an example. Thus, use of any such terms should not be taken to limit the scope of examples of the present application. It is to be understood that the methods and systems described herein are not limited to specific methods, specific components, or to particular implementations.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented Reality (AR)/Virtual Reality (VR)/Mixed Reality (MR).

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value and/or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only, and is not intended to be limiting.

It is to be appreciated that certain features of the disclosed subject matter which are, for clarity, described herein in the context of separate examples, can also be provided in combination in a single example. Conversely, various features of the disclosed subject matter that are, for brevity, described in the context of a single example, can also be provided separately, or in any sub-combination. Further, any reference to values stated in ranges includes each and every value within that range.

It is to be understood that the methods and systems described herein are not limited to specific methods, specific components, or to particular implementations. It is also to be understood that the terminology used herein is for the purpose of describing particular examples only and is not intended to be limiting.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an example, the example, another example, some examples, one or more examples, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other embodiments. Furthermore, to the extent that the term "include", "have", or the like is used in the description or the claims, such term is intended to be inclusive in a manner similar to the term "comprise" as "comprise" is interpreted when employed as a transitional word in a claim. References in this description to "an example", "one example", or the like, may mean that the particular feature, function, or characteristic being described is included in at least one example of the present embodiments. Occurrences of such phrases in this specification do not necessarily all refer to the same example, nor are they necessarily mutually exclusive.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Modern electronic devices, such as smartphones, wearable devices, and AR/VR/MR systems, commonly incorporate a variety of onboard components, including motion sensors, touch sensors, microphones, and other input-detection elements. These components may be routinely used to detect physical interaction with the device, such as movement, touch input, or gestures made while a user composes or interacts with digital content.

With the increasing use of automated systems, such as chatbots, generative Al engines, and other non-human communication tools, text-based communication may be produced without any corresponding physical interaction with the device itself. As a result, it can become difficult for a receiving device or application to distinguish between communication generated by a human interacting with a device and communication generated automatically by a non-human source. A non-human source may include, for example, an automated system that generates communication without physical interaction from a human user. Examples of a non-human source include a chatbot, a rule-based automation script, a generative artificial intelligence model, a large language model, a scheduled or background process that produces communication, or any software component configured to generate text, messages, or other communication content without the device detecting human interaction. A non-human source may generate the communication through programmatic execution rather than through physical movement, touch input, speech input, or other sensor-detectable behavior associated with a human user.

Various aspects of the present disclosure relate to systems and techniques that use sensor data from an electronic device to determine whether a human user or a non-human system generates communication on/by the electronic device. The disclosed technology may obtain interaction signals from components that appear in many modern devices, including motion sensors such as accelerometers and gyroscopes, touch-input sensors, microphones, and/or image sensors. These components may produce measurable data during ordinary human activity. Examples may include micro-movements that occur during typing, touch-input patterns that occur during text entry, ambient audio fluctuations that occur during speech-to-text operations, and/or visual cues that occur during physical device handling.

The disclosed systems correlate this sensor data with message-generation activity. The systems compare the sensor data to behavioral profiles that represent known human interaction patterns. The systems apply rule-based analysis or machine-learning models to classify communication as human-generated or non-human-generated. The systems can operate on a sending device, on a receiving device, or on a remote server. The systems can analyze individual messages or continuous communication sessions. The systems can also produce confidence scores, threshold outputs, and multi-sensor fusion results to achieve reliable classification and to reduce the likelihood of spoofing.

These techniques enable a communication platform, security service, and/or device-level application to identify/determine the likely origin of communication with improved accuracy. The systems support enhanced verification, fraud reduction, and user-safety features by using real-world sensor behavior to distinguish human activity from automated or Al-driven activity.

Various aspects of the present disclosure provide significant advantages in the field of device-authenticated communication. These aspects use sensor data that originates from real physical interaction with an electronic device. The system obtains micro-movements from accelerometers and gyroscopes, touch-input sequences from capacitive displays, voice fluctuations from microphones, and visual interaction cues from image sensors. The system uses this sensor data to classify communication as human-generated or non-human-generated. This approach increases reliability because automated systems do not create the same interaction signatures that result from real human device handling.

These aspects improve security by allowing a receiving device or platform to detect automated or Al-driven messaging activity in real time. The system performs message-by-message classification, which allows a device to identify suspicious activity inside a continuous conversation. This provides a more granular and adaptive security layer than conventional content-based filters. These aspects also reduce reliance on network-heavy verification techniques by enabling on-device analysis when appropriate. This reduces network traffic, lowers latency, and improves privacy because the device processes sensitive data locally instead of transmitting raw sensor streams to remote servers. The system also supports multi-sensor fusion, dynamic thresholding, and/or confidence scoring, which improves accuracy in diverse environments, including wearable and mobile contexts.

Because these aspects use physical sensor signals that non-human systems cannot easily reproduce, these aspects create a robust and difficult-to-spoof verification mechanism that strengthens user safety and fraud-prevention features across smartphones, wearable devices, AR systems, VR systems, and/or other platforms.

The disclosed aspects provide a technological improvement to the way electronic devices operate. The system obtains and processes high-frequency sensor data that arises from the physical operation of hardware components such as accelerometers, gyroscopes, microphones, touch displays, and/or image sensors. The system correlates these signals with message-generation events to determine whether a human or a non-human system produced/generated the communication. This process of the exemplary aspects of the present disclosure improves the functioning of the electronic device because the electronic device gains a new verification capability that conventional messaging platforms lack and generally do not possess.

No human may perform these operations manually. A human is unable to perceive or track micro-movements at the sampling rates produced by accelerometers. A human is unable to correlate sensor streams with message-generation timestamps at millisecond precision. A human is unable to compute/determine multi-sensor fusion results and/or apply machine-learning classification logic to thousands of data points per second. These aspects, therefore, rely on specialized hardware and computational models and/or determinations that create a capability that a machine (i.e., non-human) is capable of providing.

Various aspects of the present disclosure use specific hardware components, produce improved device functionality, and perform a technical process that transforms raw sensor signals into a classification output through structured computational analysis. The aspects solve a technical challenge that arises in the operation of electronic communication devices. Such aspects integrate sensor-level processing into the communication workflow, which results in a new and improved method for verifying the source of digital communication.

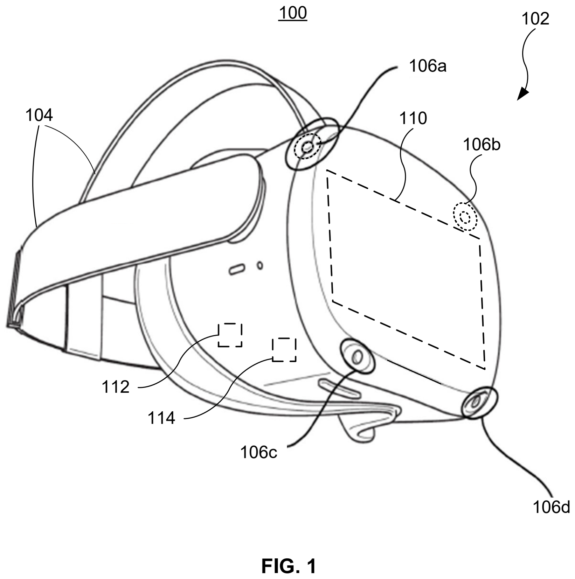

These and other examples are discussed below with reference to FIGS. 1, 2, 3, 4, 5, 6, 7, 8, and 9. However, those skilled in the art will readily appreciate that the detailed description given herein with respect to these Figures is for explanatory purposes only and should not be construed as limiting.

FIG. 1 illustrates an example of an electronic device that takes the form of an artificial reality system 100. In some examples, the artificial reality system 100 may be used for VR applications and/or Augmented Reality (AR)/Mixed Reality (MR) applications. In some examples, the artificial reality system 100 may operate within, or be associated with, a Metaverse network. As shown, the artificial reality system 100 may include an HMD 102. The HMD 102 may include a head strap 104 (also referred to herein as head band) used to fit the HMD 102 onto a user's head. The HMD 102 may further include several image sensors. For example, the HMD 102 may include an image sensor 106a, an image sensor 106b, an image sensor 106c, and an image sensor 106d and each of the image sensors may be representative of an additional image sensor(s). In some examples, each of the image sensors 106a, 106b, 106c, and 106d may take the form of a camera designed to capture images (e.g., still images, motion images (e.g., video)) of the environment surrounding the HMD 102. Further, in some examples, a compressible shock absorbing device (not shown in FIG. 1) may be mounted on each of the image sensors 106a, 106b, 106c, and 106d. The shock absorbing device may be configured to substantially maintain the structural integrity of the image sensors 106a, 106b, 106c, and 106d in case an impact force is imparted on image sensors 106a, 106b, 106c, and 106d. In some examples, each of the image sensors 106a, 106b, 106c, and 106d may be pivotally and/or translationally mounted to the HMD 102 to pivot the image sensors 106a, 106b, 106c, and 106d at a range of angles and/or to allow for translation in multiple directions, in response to an impact. Also, each of the image sensors 106a, 106b, 106c, and 106d may protrude from a surface (e.g., a front surface, a corner surface, etc.) of the HMD 102 so as to provide the image sensors 106a, 106b, 106c, and 106d with, for example, an increased field of view (e.g., at least 180 degrees field of view), thus allowing the image sensors 106a, 106b, 106c, and 106d to view a relatively greater number of objects (e.g., a hand, a user, a surrounding real-world environment, etc.).

The HMD 102 may further include an assembly 110. In some examples, the assembly 110 may include multiple displays. In this regard, in some examples, the assembly 110 may be referred to as a display assembly or multi-display. As a non-limiting example, the assembly 110 may include an organic light-emitting diode (OLED) display, including a micro OLED display. The assembly 110 may be configured to present visual information based on an artificial reality system application(s) (e.g., VR) and/or AR application(s), as well as MR application(s). Additionally or alternatively, the assembly 110 may be coupled (e.g., electrically coupled) to each of the image sensors 106a, 106b, 106c, and 106d, and may present visual information in the form of an external environment, as captured by one or more of the image sensors 106a, 106b, 106c, and 106d.

Additionally, the artificial reality system 100 may include a sensor 112. In one or more implementations, the sensor 112 takes the form of a motion sensor. In this regard, the sensor 112 may take the form of an accelerometer or a gyroscope, as non-limiting examples. The sensor 112 may track motion or movement of the artificial reality system 100. For example, when a user is wearing the artificial reality system 100, the sensor 112 may track the user's head movements.

Additionally, the artificial reality system 100 may include one or more audio transducers 114. The one or more audio transducers 114 may include an audio speaker(s), a microphone(s), or a combination thereof. When the one or more audio transducers 114 include a microphone, the one or more audio transducers 114 may be designed to receive and convert ambient and/or user-based sounds (e.g., a user's spoken words) into electrical signals, and subsequently convert the electrical signals to text.

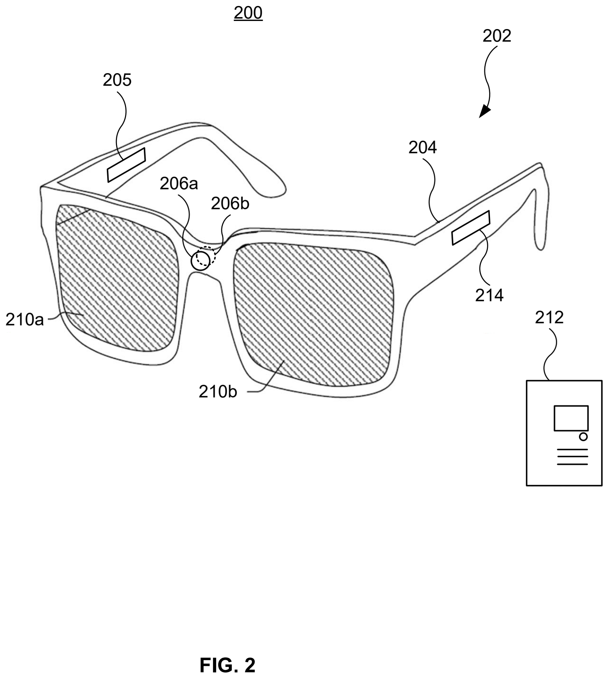

FIG. 2 illustrates an example of an electronic device that takes the form of an artificial reality system 200. The artificial reality system 200 may include an HMD 202 (e.g., glasses (e.g., smart glasses)) that includes a frame 204 that may be placed on a user's head, including on a user's ears and nose. The frame 204 may carry or hold several components. For example, the frame 204 may hold an audio device 205. In some examples, the audio device 205 may take the form of a microphone designed to receive and convert ambient and/or user-based sounds (e.g., a user's spoken words) into electrical signals, and subsequently convert the electrical signals to text. In this regard, the audio device 205 may provide sound waves (e.g., acoustical energy) in conjunction with artificial reality content. In some examples, the audio device 205 may take the form of audio speakers designed to convert electrical signals into sound waves. In some examples, the audio device 205 may be a combination of a microphone and an audio speaker(s). The audio device 205 is shown at a single, particular location on the frame 204. However, the audio device 205 may generally be positioned at other locations of the frame 204. Also, the HMD 202 may include additional audio devices having any feature shown and described for the audio device 205, and may be positioned at different locations on the frame 204.

The HMD 202 may further include one or more image sensors used to capture images and videos of environments. For example, the HMD 202 may include an image sensor 206a (e.g., front camera) used to capture an environment (e.g., real-world environment) viewed by a user of the HMD 202. The HMD 202 may also include an image sensor 206b (e.g., rear camera, an eye tracking system) to, for example, track the vergence movement of the user wearing the HMD 202. The HMD 202 may include an assembly 210a and an assembly 210b held by the frame 204. Similar to the assembly 110 (shown in FIG. 1), each of the assemblies 210a and 210b may include multiple displays. Alternatively, each of the assemblies 210a and 210b may take the form of a lens (e.g., transparent substrate). In this regard, the HMD 202 may include a projector designed to project virtual content onto the assemblies 210a and 210b for viewing by a user.

The artificial reality system 200 may further include a computing device 212 that includes a trackpad and/or one or more buttons. The computing device 212 may receive inputs from users and relay the inputs to the HMD 202. The computing device 212 may also provide haptic feedback to users. The computing device 212 may be connected to the HMD 202 through a wired (e.g., cable) or wireless connection (e.g., BLUETOOTH connection, WI-FI connection). In this regard, the HMD 202 and the computing device 212 may each be equipped with wired or wireless communication capabilities. Also, the computing device 212 can control the HMD 202 to, for example, provide VR, AR, and/or MR content to the assemblies 210a and 210b. In some examples, the computing device 212 can be a standalone host computing device (e.g., smartphone) with a controller. Alternatively, the computing device 212 (or several components thereof) may be integrated within the HMD 202. Generally, the computing device 212 may take the form of any hardware platform capable of providing artificial reality content and receiving inputs from users.

Additionally, the artificial reality system 200 may include a sensor 214. In one or more implementations, the sensor 214 takes the form of a motion sensor. In this regard, the sensor 214 may take the form of an accelerometer or a gyroscope, as non-limiting examples. The sensor 214 may track motion or movement of the artificial reality system 200. For example, when a user is wearing the artificial reality system 200, the sensor 214 may track the user's head movements.

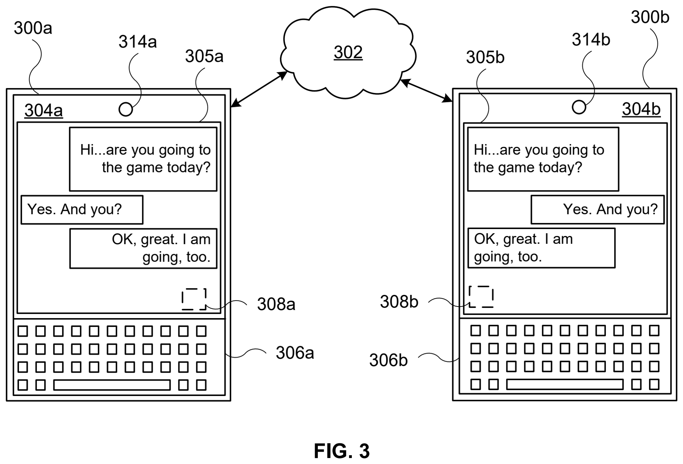

FIG. 3 illustrates an example of electronic devices providing two-way communication, in accordance with aspects of the present disclosure. As shown, an electronic device 300a and an electronic device 300b (each of which may be referred to as an apparatus) are in communication over a network 302. For example, the communication between the electronic devices 300a and 300b may include text-based communication (or a series of text-based communications), in which each of the electronic devices 300a and 300b generates a text-based input that is transmitted between the electronic devices 300a and 300b over the network 302. The communication is intended to be exemplary, non-limiting communication. Also, as non-limiting examples, the network 302 may include a cellular network, a satellite-based network, a BLUETOOTH network, or a WI-FI network. In one or more implementations, the network 302 may be operated by a server (e.g., physical server, cloud based server).

The electronic device 300a and the electronic device 300b may include a display 304a and a display 304b, respectively. In one or more implementations, each of the displays 304a and 304b takes the form of a touch display, such as a capacitive touch input display designed to detect a user's input or gesture (e.g., by a user's digit) detected by a touch input sensor.

When users wish to communicate through the electronic device 300a and the electronic device 300b, the electronic device 300a and the electronic device 300b may run a software application 305a (e.g., application or app) and a software application 305b, respectively, that is presented on the display 304a and the display 304b, respectively. For example, the software applications 305a and 305b may include a messaging application utilized to exchange communication between the electronic devices 300a and 300b via their respective users. Moreover, the electronic device 300a and the electronic device 300b may further present a keyboard 306a and a keyboard 306b, respectively, allowing users to generate (e.g., type) communication that is shown on the display 304a and the display 304b, respectively. When/in an instance in which the electronic device 300b generates a communication(s) (e.g., text-based input) for the electronic device 300a, the communication(s) is transmitted over the network 302 to the electronic device 300b, and vice versa. The electronic device 300a and/or the software application 305a identify the communication(s). The communication(s) is subsequently presented through the software application 305a via the display 304a. A similar operation may occur when/in an instance in which the electronic device 300a generates communication(s) for the electronic device 300b.

The electronic device 300a and the electronic device 300b may further include a sensor 308a and a sensor 308b, respectively. In one or more implementations, each of the sensors 308a and 308b may take the form of a motion sensor. In this regard, each of the sensors 308a and 308b may be designed to determine whether an event occurs to the electronic device 300a and the electronic device 300b, respectively. For example, each of the sensors 308a and 308b may be designed to identify/detect motion of the electronic device 300a and the electronic device 300b, respectively.

In an example scenario, a user may interact with the display 304b of the electronic device 300b (e.g., at the keyboard 306b) in order to generate communication through the software application 305b for transmission to the electronic device 300a. The user interaction may include touching the display 304b at a location corresponding to the keyboard 306b with one or more of the user's digits. While the user is interacting with the display 304b to generate/type the communication(s), the sensor 308b may detect movement of the electronic device 300b. The movement may include small movements and/or vibrations. Accordingly, the user interaction with the display 304b while generating the communication(s) may cause at least some movement to the electronic device 300b. When the electronic device 300a receives data via the network 302 corresponding to the generated communication(s) from the electronic device 300b, the electronic device 300a may also receive additional data (e.g., sensor data or sensor-based data from the sensor 308b) via the network 302 corresponding to identified/detected movement of the electronic device 300a by the sensor 308b. Moreover, in one or more implementations, the identified/detected movement may be determined to be contemporaneous with the generation of the communication(s) by the electronic device 300b. For example, the electronic device 300b and/or the software application 305b may create a timestamp for initiation of the generated communication(s) as well as a timestamp for the identified/detected movement of the electronic device 300b as determined by the sensor 308b. If the respective timestamps occur within a threshold time interval, the electronic device 300a and/or the software application 305a may determine the communication(s) provided by the electronic device 300b was generated via a human source (e.g., the user). Put another way, the electronic device 300a may determine the communication(s) provided by the electronic device 300b was not generated via a non-human source (e.g., a chatbot, a generative Al engine, or the like). Conversely, if no timestamp corresponding to identified/detected movement of the electronic device 300b by the sensor 308b is provided, the electronic device 300a may determine the communication(s) provided by the electronic device 300b was generated via a non-human source. The electronic device 300a and/or the software application 305a may use the communication(s) and the data corresponding to the sensor information from the sensor 308b of the electronic device 300b to identify each individual message generated through the application 305b and determine whether each individual message received from the electronic device 300b was generated from a human source using the data from sensor 308b in the manner described above. In this regard, the electronic device 300a and/or the software application 305a may determine, on a message-by-message basis, which message(s) were generated by a human source and which messages(s) were generated by a non-human source. Each message may be "stamped," or otherwise identified, with an indication (e.g., flag, or other indicator) that the message was generated by a human source or by a non-human source. Further, the electronic device 300a may present an indication (e.g., some visual information next to each message) on the display 304a to view by a user of the electronic device 300a, indicating to the user whether the message was determined to be generated by a human source or non-human source, or conversely, the indication may be stored by the electronic device and/or the software application 305a without providing an indication to the user of the electronic device 300a.

In one or more implementations, the electronic device 300b and/or the software application 305b running the electronic device 300b may determine whether the communication over the software application 305b is from a human source or a non-human source, as opposed to providing data to the electronic device 300a and/or the software application 305a for the human/non-human determination. For example, the software application 305b running on the electronic device 300b may communicate with the sensor 308b of the electronic device 300b to determine whether the sensor 308b identified/detected movement of the electronic device 300b, and in particular, while the user of the electronic device 300b is interacting with the electronic device 300b to generate the communication over the software application 305b. In this regard, the electronic device 300b and/or the software application 305b may determine is generated from a human source when, for example, the detected movement of the electronic device 300b by the sensor 308b is contemporaneous (or at least to within a threshold time interval) with the user interaction to generate the communication over the software application 305b. Moreover, the electronic device 300b and/or the software application 305b may identify each individual message generated through the messaging application and determine whether each individual message was generated from a human source using the sensor 308b in the manner described above. In this regard, the electronic device 300b and/or the software application 305b may determine, on a message-by-message basis, which message(s) were generated by a human source. Each message may be stamped, or otherwise identified, with an indication that the message was generated by a human source or by a non-human source. The determination as to whether the communication is generated from a human or non-human source may be transmitted from the electronic device 300b to the electronic device 300a via the network 302.

Alternatively, or in combination, other components of electronic devices may be used to determine whether the source of communication is generated by a human or a non-human source. For example, the electronic device 300a and the electronic device 300b may include a sensor 314a and a sensor 314b, respectively. In one or more implementations, each of the sensors 314a and 314b takes the form of an audio transducer (e.g., microphone). As an example, the software application 305b may receive data corresponding to usage of the sensor 314b to generate communication (e.g., text) based on voice input or speech input received by the sensor 314b from a user of the electronic device 300b. The electronic device 300a and/or the software application 305a may receive, in addition to communication from the electronic device 300b, data corresponding to utilization of the sensor 314b to generate the communication and use the collective/obtained data to determine the source of the communication was generated by a human source. Alternatively, the electronic device 300b and/or the software application 305b may determine, based on utilization of the sensor 314b, that the communication was generated by a human source, and provide the determination to the electronic device 300a. Conversely, the lack of utilization of the sensor 314b may indicate the communication was generated by a non-human source.

In one or more implementations, each of the sensors 314a and 314b takes the form of an image sensor (e.g., camera). As an example, the software application 305b may receive data corresponding to the usage of the sensor 314b to capture an image of a user while using the software application 305b. The electronic device 300a and/or the software application 305a may receive, in addition to communication from the electronic device 300b, data corresponding to utilization of the sensor 314b, with at least some of the data including image data of the user of the electronic device 300b. The electronic device 300a and/or the software application 305a may use the image data to determine the source of the communication was generated by a human source. Alternatively, the electronic device 300b and/or the software application 305b may determine, based on utilization of the sensor 314b, that the communication was generated by a human source and provide the determination to the electronic device 300a. Conversely, the lack of utilization of the sensor 314b may indicate the communication was generated by a non-human source. Also, in one or more implementations, the electronic device 300a and/or the software application 305a may request data (e.g., image data) from the sensor 314b.

In one or more implementations, a respective touch input sensor of the displays 304a and 304b may be used to determine whether the source of the communication was generated by a human or non-human source. For example, the electronic device 300a and/or the software application 305a may receive, in addition to communication from the electronic device 300b, data corresponding to utilization of the touch input sensor of the display 304b of the electronic device 300b while the software application 305b is in use. The electronic device 300a and/or the software application 305a may use the data indicating touch input sensor utilization to determine the source of the communication was generated by a human source. Alternatively, the electronic device 300b and/or the software application 305b may determine, based on utilization of the touch sensor, that the communication was generated by a human source and provide the determination to the electronic device 300a. Conversely, the lack of utilization of the touch sensor may indicate the communication was generated by a non-human source.

Any one or more of the approaches in this application may be used alone or in combination to ultimately determine by an electronic device and/or a software application whether the source of the communication was generated by a human or non-human source. In this regard, a determination, by an electronic device and/or a software application, regarding whether the source of generated communication is from a human source or a non-human source may be based on whether a threshold is exceeded. For example, the electronic device and/or the software application may determine the source of communication is from a human source when the determination quantitatively exceeds a threshold level, and the electronic device and/or the software application may determine the source of communication is from a non-human source when the determination does not quantitatively exceed the threshold level. Moreover, data from additional sensors and/or audio transducers described herein may collectively be used to exceed the quantitative threshold level, which may increase the confidence level that the source is a human source.

Also, the electronic devices 300a and 300b and/or the software applications 305a and 305b may require users to opt in prior to obtaining data for use in determining whether the source of the communication was generated by a human or non-human source. For example, respective users of the electronic device 300a and the electronic device 300b may receive a prompt via the software applications 305a and 305b, respectively, to opt in and provide permission to be tracked using sensors (e.g., the sensor 308b, the sensor 314b, and/or the touch sensor of the display 304b). The users will also have the option to opt out of such data acquisition.

In the foregoing examples, the electronic device 300a and/or the software application 305a use the data from the electronic device 300b provided via the network 302 to determine whether the source of the messages is generated by a human or non-human source. However, in one or more implementations, the network 302 may use the data from the electronic device 300b to determine whether the source of the messages are generated by a human or non-human source, and may provide the determination to the electronic device 300a for use with the software application 305b.

In some example aspects, the electronic devices 300a and 300b may improve reliability of the human or non-human determination by correlating multiple sensor streams. For example, the device may correlate data from motion sensors, touch-input sensors, and audio transducers to confirm whether physical interaction with the device aligns with the timing of message-generation events. A multi-sensor correlation process can increase classification accuracy because non-human systems typically fail to produce consistent physical signatures across different sensor types.

In some example aspects, the electronic devices 300a and 300b may analyze temporal sequences of sensor events to identify interaction patterns characteristic of human behavior. A human user often produces micro-movement patterns, typing rhythms, or touch-input sequences that follow natural timing variations. The devices may store these timing sequences, compare them to message timestamps, and determine whether the message-generation pattern aligns with expected human activity. The devices may also update stored timing profiles to accommodate changes in a specific user's interaction patterns.

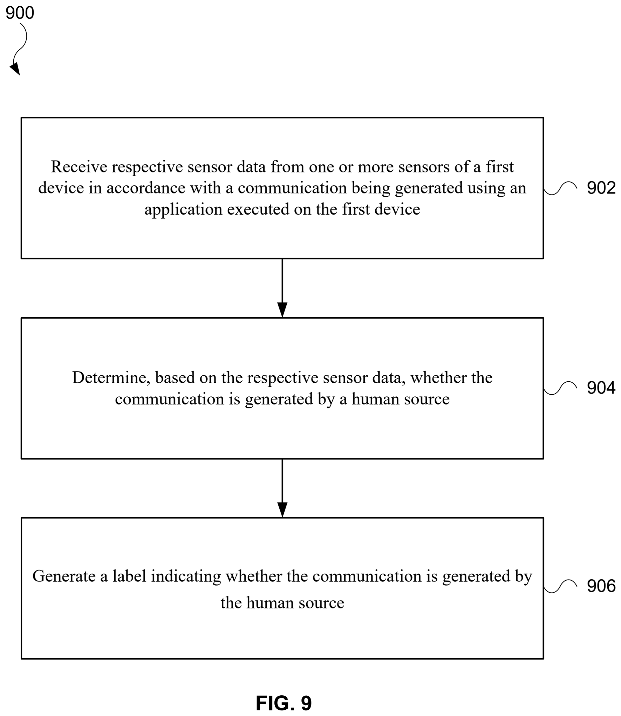

In some example aspects, one or more of the electronic devices 300a and 300b may implement one or more trained machine learning models (e.g., machine learning model(s) 930 described with reference to FIG. 9) to classify communication as human-generated or non-human-generated. The machine learning models may analyze extracted features that include movement amplitude, sensor-noise characteristics, touch-input distributions, acceleration-vector changes, swipe trajectories, or audio variations. The models may produce a confidence value for each classification and may update their parameters when new sensor data becomes available to improve future determinations.

In some example aspects, the electronic devices 300a and 300b may implement adaptive thresholding techniques to maintain classification accuracy across varied operational environments. For example, a device may experience background motion when a user walks or moves. The device 300a or 300b may detect this context and apply a different threshold for evaluating movement associated with text entry. The device 300a or 300b may also adjust thresholds for speech-derived communication when ambient noise levels increase. The adaptive thresholding techniques increase robustness of the human or non-human determination.

In some example aspects, the electronic devices 300a and 300b may perform consistency checks across multiple associated devices. For example, if a user operates both a smartphone and a wearable device during a communication session, the devices may compare sensor-derived interaction indicators from each device. Consistent sensor signatures across the devices may strengthen the determination that communication originates from a human user.

In some example aspects, the electronic devices 300a and 300b may implement privacy-preserving data-processing techniques. For example, the devices 300a and 300b may extract high-level interaction features from raw sensor data and transmit only the extracted features rather than the underlying raw data. The devices 300a and 300b may also perform the human or non-human classification locally and transmit only the resulting classification value. These approaches reduce data exposure while maintaining accurate verification capabilities.

In some example aspects, wearable devices, AR systems, and VR systems may provide additional motion and orientation data that further strengthen the classification process. For example, an AR headset may detect natural head movements during conversation, which can indicate human activity. A wearable device may detect wrist rotations or arm movements that correlate with message-generation behavior. The devices may incorporate these additional data sources into the human or non-human determination to improve accuracy.

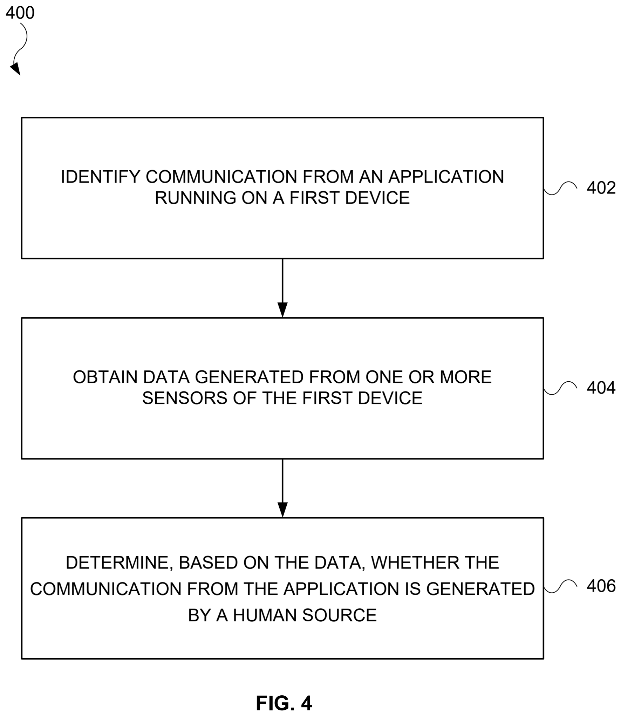

FIG. 4 illustrates an example flowchart illustrating a process 400 for determining whether communication from a device is generated by a human source or a non-human source, in accordance with aspects of the present disclosure. As shown in the example of FIG. 4, the process 400 begins at block 402 by identifying a communication from an application (e.g., software application 305b shown in FIG. 3) running on a first device (e.g., electronic device 300b shown in FIG. 3). The communication may include a text-based input that is presented through the application via a display (e.g., display 304b shown in FIG. 3). At block 404, the process 400 obtains data generated from one or more sensors of the first device. The one or more sensors may include, for example, sensor 308b of the electronic device of the first device). At block 406, the process 400 determines, based on the data, whether the communication from the application is generated by a human source.

The process 400 may be performed by a device receiving communication and data from another device. Alternatively, the process 400 may be performed on a device and subsequently transmitted to another device. Further, the process 400 may be performed by a remote device (e.g., server).

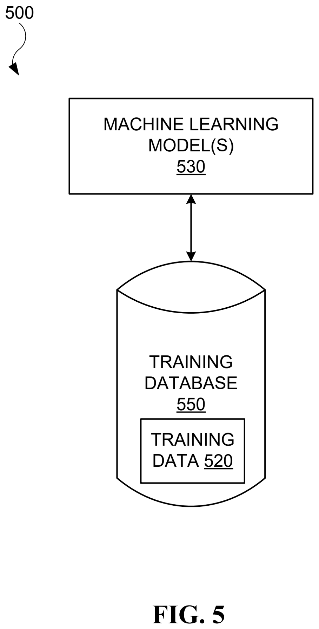

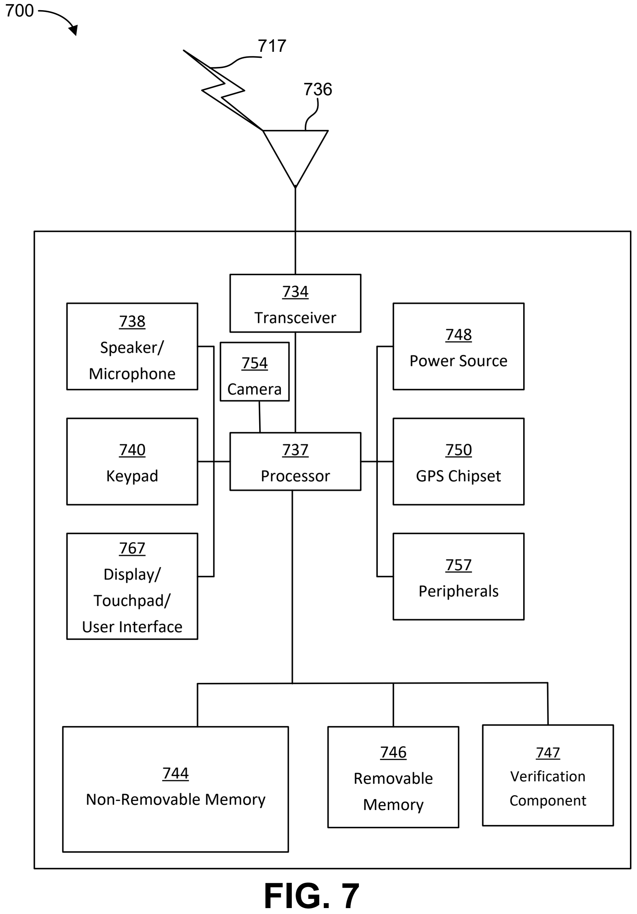

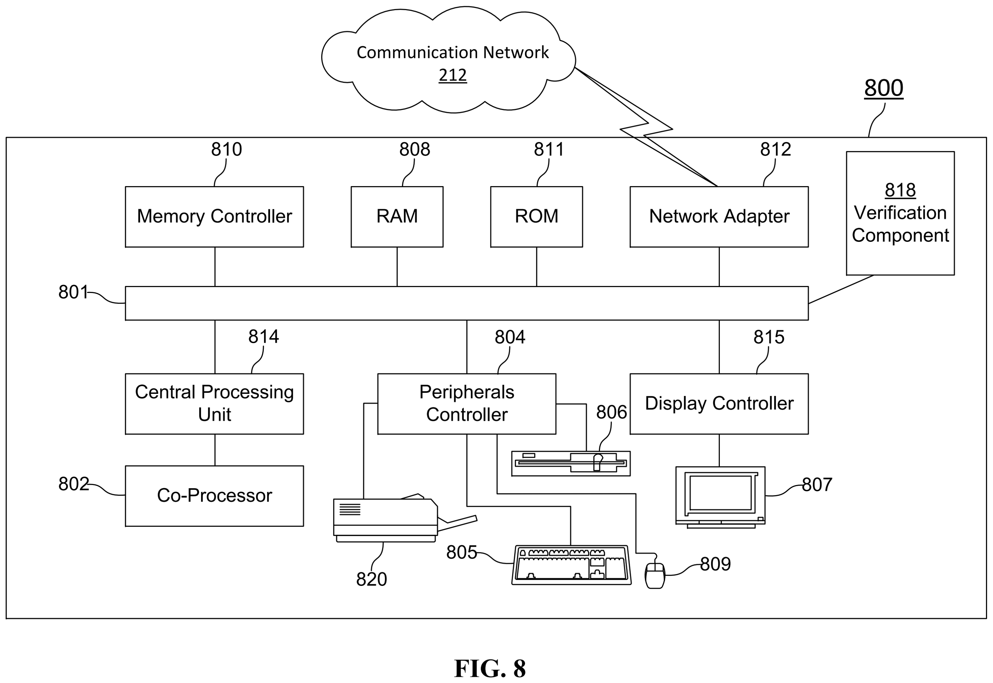

FIG. 5 illustrates an example of a machine learning framework 500 including machine learning model(s) 520 and a training database 550, in accordance with one or more examples of the present disclosure. The training database 550 may store training data 520. In some examples, the machine learning framework 500 may be hosted locally in a computing device or hosted remotely. By utilizing the training data 520 of the training database 550, the machine learning framework 500 may train the machine learning model(s) 520 to perform one or more functions, described herein, of the machine learning model(s) 520. In some examples, the machine learning model(s) 520 may be stored in a computing device. For example, the machine learning model(s) 520 may be embodied within a communication device (e.g., UE 700). In some other examples, the machine learning model(s) 520 may be embodied within another device (e.g., device 300a or 300b, UE 700, computing system 800, or artificial reality system 100 or 200). Additionally, the machine learning model(s) 520 may be processed by one or more processors (e.g., processor 737 of FIG. 7, coprocessor 881 of FIG. 8). In some examples, the machine learning model(s) 520 may be associated with one or more operations (or performing operations), such as operations associated with the process 400 described with reference to FIG. 4 or the process 900 described with reference to FIG. 9. In some other examples, the machine learning model(s) 520 may be associated with other operations.

In an example, the training data 520 may include attributes of thousands of real-world usage patterns derived from sensor signals captured during human interaction with devices. For example, the data may include motion signatures (e.g., accelerometer or gyroscope variations), touch-input sequences, ambient-audio fluctuations, device-handling micro-movements, or other sensor-detected events obtained/determined from devices such as smartphones, wearable devices, AR/VR/MR systems, communication devices (e.g., UEs 700, communication devices 635, 640, 645, 650), computing systems 800, and similar hardware. In some examples, the training data 520 may further include user-interaction events corresponding to typing behavior, swiping behavior, device-holding posture, or voice-to-text input. Attributes of such interaction data may include, but are not limited to, timing patterns, amplitude variations, orientation changes, motion trajectories, touch-sensor distributions, and/or correlations between sensor events and message-generation events.

The training data 520 employed by the machine learning model(s) 520 may be fixed or updated periodically. Training data 520 may be updated over time with additional sensor-interaction data accumulated after earlier training cycles. Alternatively, the training data 520 may be updated in real-time based upon sensor evaluations performed by the machine learning model(s) 520 in a non-training mode. This may be illustrated by the double-sided arrow connecting the machine learning model(s) 520 and stored training data 520. Other examples of training data 520 may include sensor logs associated with recent device activity, device-usage sessions voluntarily shared by users, or anonymized interaction patterns obtained from networked systems. These data items may be analyzed by a device (e.g., computing system 800, UE 700, artificial reality system 100, or artificial reality system 200) to learn the characteristics of human-generated sensor events and to distinguish the human-generated sensor events from non-human or automated activity.

In some examples, a component (e.g., verification component 747 or 858) and/or a device (e.g., computing system 800, UE 700, artificial reality system 100, or artificial reality system 200) may implement the machine learning model(s) 520 to classify whether communication generated on the device is associated with human interaction or non-human activity based on the analyzed sensor data.

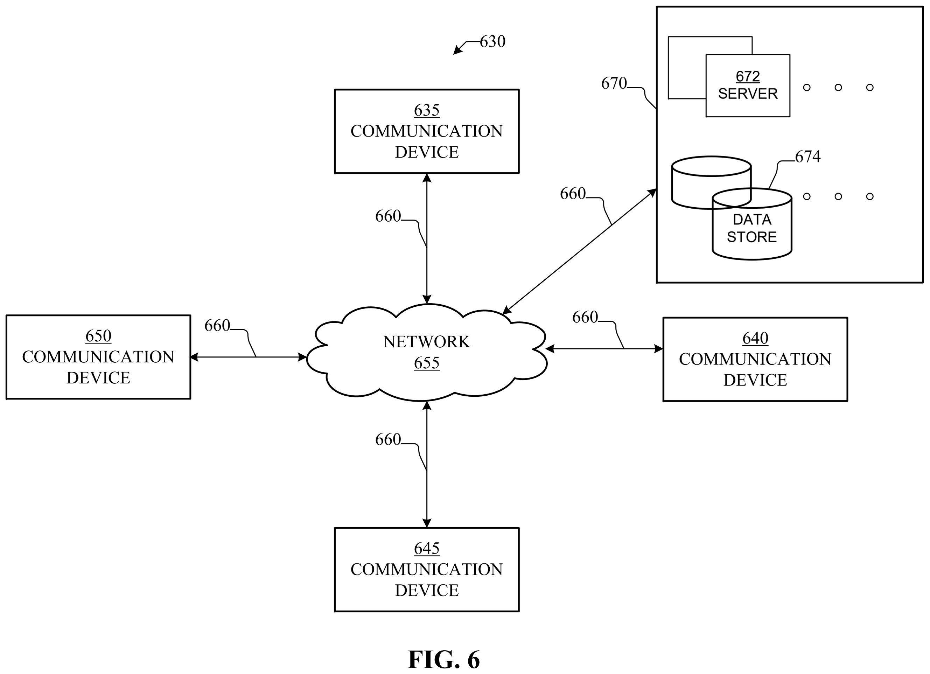

Reference is now made to FIG. 6, which is a block diagram of a system 630, in accordance with various aspects of the present disclosure. As shown in FIG. 6, the system 630 may include one or more communication devices 635, 640, 645, and 650 and a network device 670, each of which may be, for example, an electronic device 300a (described with reference to FIG. 3), an electronic device 300b (described with reference to FIG. 3), an artificial reality system 100 (described with reference to FIG. 1), the artificial reality system 200 (described with reference to FIG. 2), the UE 700 (described with reference to FIG. 7). Additionally, the system 630 may include any suitable network, such as, for example, network 655. In some examples, the network 655 may be a Metaverse network. In some examples, the network 655 may be any suitable network capable of provisioning content and/or facilitating communications among entities within, or associated with the network. As an example and not by way of limitation, one or more portions of network 655 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 655 may include one or more networks 655.

Links 660 may connect the communication devices 635, 640, 645, and 650 to network 655, network device 670, and/or to each other. This disclosure contemplates any suitable links 660. In some examples, one or more links 660 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some examples, one or more links 660 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 660, or a combination of two or more such links 660. Links 660 need not necessarily be the same throughout system 630. One or more first links 660 may differ in one or more respects from one or more second links 660.

Links 660 may connect the communication devices 635, 640, 645, and 650 to network 655, network device 670, and/or to each other. This disclosure contemplates any suitable links 660. In some examples, one or more links 660 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some examples, one or more links 660 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 660, or a combination of two or more such links 660. Links 660 need not necessarily be the same throughout system 630. One or more first links 660 may differ in one or more respects from one or more second links 660.

Network device 670 may be accessed by the other components of system 630 either directly or via network 655. As an example and not by way of limitation, communication devices 635, 640, 645, 650 may access network device 670 using a web browser or a native application associated with network device 670 (e.g., a mobile social-networking application, a messaging application, another suitable application, or any combination thereof) either directly or via network 655. In particular examples, network device 670 may include one or more servers 672. Each server 672 may be a unitary server or a distributed server spanning multiple computers or multiple datacenters. Servers 672 may be of various types, such as, for example and without limitation, web server, news server, mail server, message server, advertising server, file server, application server, exchange server, database server, proxy server, another server suitable for performing functions or processes described herein, or any combination thereof. In particular examples, each server 672 may include hardware, software, or embedded logic components or a combination of two or more such components for carrying out the appropriate functionalities implemented and/or supported by server 672. In particular examples, network device 670 may include one or more data stores 674. Data stores 674 may be used to store various types of information. In particular examples, the information stored in data stores 674 may be organized according to specific data structures. In particular examples, each data store 674 may be a relational, columnar, correlation, or other suitable database. Although this disclosure describes or illustrates particular types of databases, this disclosure contemplates any suitable types of databases. Particular examples may provide interfaces that enable communication devices 635, 640, 645, 650, and/or another system (e.g., a third-party system) to manage, retrieve, modify, add, or delete, the information stored in data store 674.

Network device 670 may provide users of the system 630 the ability to communicate and interact with other users. In particular examples, network device 670 may provide users with the ability to take actions on various types of items or objects, supported by network device 670. In particular examples, network device 670 may be capable of linking a variety of entities. As an example and not by way of limitation, network device 670 may enable users to interact with each other as well as receive content from other systems (e.g., third-party systems) or other entities, or to allow users to interact with these entities through an application programming interface (API) or other communication channels.

It should be pointed out that although FIG. 6 shows one network device 670 and four communication devices 635, 640, 645, and 650, any suitable number of network devices 670 and communication devices 635, 640, 645, and 650 may be part of the system of FIG. 6 without departing from the scope of the present disclosure.

FIG. 7 illustrates a block diagram of an exemplary hardware/software architecture of a communication device 700, in accordance with various aspects of the present disclosure. The communication device 700 may be an example of a user equipment (UE), hereinafter used interchangeably. In some exemplary aspects, the UE 700 may be any of the communication devices 635, 640, 645, and 650. In some exemplary aspects, the UE 700 may be a computer system such as for example a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, a head-mounted display/device (e.g., a headset), smart watch, charging case, or any other suitable electronic device. As shown in FIG. 2, the UE 700 (also referred to herein as node 700) may include a processor 737, non-removable memory 744, removable memory 746, a speaker/microphone 738, a keypad 740, a display, touchpad, and/or user interface(s) 747, a power source 748, a global positioning system (GPS) chipset 750, and other peripherals 757. In some exemplary aspects, the display, touchpad, and/or user interface(s) 747 may be referred to herein as display/touchpad/user interface(s) 747. The display/touchpad/user interface(s) 747 may include a user interface capable of presenting one or more content items and/or capturing input of one or more user interactions/actions associated with the user interface. The power source 748 may be capable of receiving electric power for supplying electric power to the UE 700. For example, the power source 748 may include an alternating current to direct current (AC-to-DC) converter, allowing the power source 748 to be connected/plugged to an AC electrical receptacle and/or Universal Serial Bus (USB) port for receiving electric power. The UE 700 may also include a camera 754. In an example, the camera 754 may be a smart camera configured to sense images/video appearing within one or more bounding boxes. The UE 700 may also include communication circuitry, such as a transceiver 734 and a transmit/receive element 736. It will be appreciated that the UE 700 may include any sub-combination of the foregoing elements.

The processor 737 is coupled to its communication circuitry (e.g., transceiver 734 and transmit/receive element 736). The processor 737, through the execution of computer executable instructions, may control the communication circuitry in order to cause the node 700 to communicate with other nodes via the network to which it is connected.

The transmit/receive element 736 may be configured to transmit signals 717 to, or receive signals from, other nodes or networking equipment. For example, in an example, the transmit/receive element 736 may be an antenna configured to transmit and/or receive radio frequency (RF) signals. The transmit/receive element 736 may support various networks and air interfaces, such as wireless local area network (WLAN), wireless personal area network (WPAN), cellular, and the like. In yet another example, the transmit/receive element 736 may be configured to transmit and/or receive both RF and light signals. It will be appreciated that the transmit/receive element 736 may be configured to transmit and/or receive any combination of wireless or wired signals.

The transceiver 734 may be configured to modulate the signals that are to be transmitted by the transmit/receive element 736 and to demodulate the signals that are received by the transmit/receive element 736. As noted above, the node 700 may have multi-mode capabilities. Thus, the transceiver 734 may include multiple transceivers for enabling the node 700 to communicate via multiple radio access technologies (RATs), such as universal terrestrial radio access (UTRA) and Institute of Electrical and Electronics Engineers (IEEE 802.11), for example.

The processor 737 may access information from, and store data in, any type of suitable memory, such as the non-removable memory 744 and/or the removable memory 746. For example, the processor 737 may store session context in its memory, (e.g., non-removable memory 744 and/or removable memory 746) as described above. The non-removable memory 744 may include RAM, ROM, a hard disk, or any other type of memory storage device. The removable memory 746 may include a subscriber identity module (SIM) card, a memory stick, a secure digital (SD) memory card, and the like. In other examples, the processor 737 may access information from, and store data in, memory that is not physically located on the node 700, such as on a server or a home computer.

The processor 737 may receive power from the power source 748, and may be configured to distribute and/or control the power to the other components in the node 700. The power source 748 may be any suitable device for powering the node 700. For example, the power source 748 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 737 may also be coupled to the GPS chipset 750, which may be configured to provide location information (e.g., longitude and latitude) regarding the current location of the node 700. It will be appreciated that the node 700 may acquire location information by way of any suitable location-determination method while remaining consistent with an example.

The UE 700 may further include a verification component 747 that may implement a machine learning model (e.g., machine learning model 530 of FIG. 5) to analyze sensor data obtained/determined by the device (e.g., UE 700) using one or more sensors (e.g., accelerometer, gyroscope, touch sensor 767, microphone 738, camera 754, GPS 750) to determine whether communication generated on the device originates from a human source or a non-human source. The verification component 747 may also be referred to as a human-verification component. In some examples, the verification component 747 may include one or more processors and one or more memory units that store instructions, model parameters, feature-extraction logic, threshold values, and historical sensor-interaction profiles used during the determination process. In some examples, the verification component 747 may implement a machine learning model and/or an artificial intelligence (AI) model that may be pre-trained, trained in real time, and/or periodically trained with training data (e.g., training data 520 of FIG. 5) to detect patterns of movement, touch interactions, or other sensor-detected events that correspond to human interaction with the device during message composition. Based on such analysis, the verification component 747 may generate an output classification and/or indicator that a given communication is likely generated by a human source or a non-human source.

In some examples, the verification component 747 may further include a multi-modal artificial intelligence (MMAI) model configured to analyze combined sensor inputs, such as motion sensor data, ambient audio variations, or touch-input events, to improve the accuracy of the human/non-human determination. In some examples, the verification component 747 may further include a temporal-pattern analysis model configured to correlate the timing of sensor-detected events with the timing of message-generation events. In some examples, the sensor data may be sent via a network (e.g., network 155) to another device (e.g., UE 700) containing a verification component (e.g., verification component 747) for analysis or verification. In some examples, the verification component 747 may be contained on a server remotely located from the UE 700.

FIG. 8 is a block diagram of an exemplary computing system 800, in accordance with various aspects of the present disclosure. In some examples, the network device 660 may be a computing system 800. The computing system 800 may include a verification component 818. The computing system 800 may include a computer or server and may be controlled primarily by computer-readable instructions, which may be in the form of software, wherever, or by whatever means such software is stored or accessed. Such computer-readable instructions may be executed within a processor, such as central processing unit (CPU) 814, to cause computing system 800 to operate. In many workstations, servers, and personal computers, central processing unit 814 may be implemented by a single-chip CPU called a microprocessor. In other machines, the central processing unit 814 may include multiple processors. Coprocessor 802 may be an optional processor, distinct from main CPU 814, that performs additional functions or assists CPU 814.

In operation, CPU 814 fetches, decodes, and executes instructions, and transfers information to and from other resources via the computer's main data-transfer path, system bus 801. Such a system bus connects the components in the computing system 800 and defines the medium for data exchange. System bus 801 typically includes data lines for sending data, address lines for sending addresses, and control lines for sending interrupts and for operating the system bus. An example of such a system bus 801 is the Peripheral Component Interconnect (PCI) bus.

Memories coupled to the system bus 801 include RAM 808 and ROM 811. Such memories may include circuitry that allows information to be stored and retrieved. ROMs 811 generally contain stored data that cannot easily be modified. Data stored in RAM 808 may be read or changed by CPU 814 or other hardware devices. Access to RAM 808 and/or ROM 811 may be controlled by memory controller 810. Memory controller 810 may provide an address translation function that translates virtual addresses into physical addresses as instructions are executed. Memory controller 810 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 800 may contain peripherals controller 804 responsible for communicating instructions from CPU 814 to peripherals, such as printer 820, keyboard 805, mouse 809, and disk drive 806. Display 807, which is controlled by display controller 815, may be used to display visual output generated by computing system 800. Such visual output may include text, graphics, animated graphics, and video. The display 807 may also include, or be associated with a user interface. The user interface may be capable of presenting one or more content items and/or capturing input of one or more user interactions associated with the user interface. Display 807 may be implemented with a cathode-ray tube (CRT)-based video display, a liquid-crystal display (LCD)-based flat-panel display, gas plasma-based flat-panel display, or a touch-panel. Display controller 815 includes electronic components required to generate a video signal that is sent to display 807.

Further, computing system 800 may contain communication circuitry, such as for example a network adaptor 812, that may be used to connect computing system 800 to an external communications network, such as network 655 of FIG. 6, to enable the computing system 800 to communicate with other nodes (e.g., UE 700) of the network.

The verification component 818 may receive one or more requests to determine whether communication generated through a device (e.g., UE 700, computing system 800) originates from a human source or a non-human source. In response to receipt of such a request, the device may utilize the verification component 818 to analyze sensor data captured by the device, such as motion data, touch-input activity, audio input, or other sensor-detected events, to understand whether the device exhibits physical interaction characteristic of human use. The device may use the verification component 818 to recognize and identify sensor-detected patterns from a preset list of behavioral signatures associated with human interaction. The device may then use the verification component 818 to compare the detected sensor information to one or more models or reference profiles stored in a library (e.g., local memory and/or remote memory). The library may include versions of one or more trained models capable of classifying sensor data as human-generated or non-human-generated. The verification component 818 may then generate a classification or confidence score indicating whether the communication corresponds to human activity (e.g., device micro-movements during typing, touch interactions, or speech-based text generation). Additional sensor-derived indicators may be evaluated using the verification component 818. The verification component 818 may then be utilized to output a determination or flag associated with the communication. Computing system 800 may then generate an output that includes the human/non-human classification for the communication.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

FIG. 9 illustrates an example flowchart illustrating a process 900 for verifying a communication, in accordance with aspects of the present disclosure. As shown in the example of FIG. 9, the process 900 begins at block 902 receiving respective sensor data from one or more sensors of a first device in accordance with a communication being generated using an application executed on the first device. The communication may comprise a text-based input or an audio-based input. The respective sensor data may include movement data from a motion sensor of the first device, touch input data from a touch input sensor associated with a display of the first device, and audio data from a microphone of the first device. In some aspects, a machine learning model may combine the respective sensor data to generate a fused feature set for use in subsequent analysis. At block 904, the process 900 determines, based on the respective sensor data or the fused feature set, whether the communication is generated by a human source. At block 906, the process 900 generates a label indicating whether the communication is generated by the human source, and may transmit the communication and the label to a second device.

The process 900 may be performed by a device receiving communication and data from another device. Alternatively, the process 900 may be performed on a device and subsequently transmitted to another device. Further, the process 900 may be performed by a remote device (e.g., server).

## Claims

1. A method for verifying a communication, the method comprising:
receiving respective sensor data from one or more sensors of a first device in accordance with a communication being generated using an application executed on the first device;
determining, based on the respective sensor data, whether the communication is generated by a human source; and
generating a label indicating whether the communication is generated by the human source.

2. The method of claim 1, wherein the communication comprises a text-based input or an audio-based input.

3. The method of claim 1 or 2, further comprising:
transmitting, to a second device, the communication; and
transmitting, to the second device, the label indicating whether the communication is generated by the human source.

4. The method of any preceding claim, wherein:
one sensor of the one or more sensors comprises a motion sensor of the first device; and
the respective sensor data associated with the motion sensor comprises movement data of the first device.

5. The method of any preceding claim, wherein:
one sensor of the one or more sensors comprises a touch input sensor associated with a display of the first device; and
the respective sensor data associated with the touch input sensor comprises touch input data.

6. The method of any preceding claim, wherein:
one sensor of the one or more sensors comprises a microphone of the first device; and
the respective sensor data associated with the microphone comprises audio data.

7. The method of any preceding claim, further comprising:
combining, via a machine learning model, the respective sensor data to generate a fused feature set, wherein the determining is based on the fused feature set.

8. An apparatus to verify a communication, comprising:
one or more processors; and
one or more memories coupled with the one or more processors and storing processor-executable code that, when executed by the one or more processors, is configured to cause the apparatus to carry out the method of any preceding claim.

9. A computer-readable medium having program code recorded thereon for verifying a communication, the program code when executed by one or more processors of a computing device cause the computing device to carry out the method of any of claims 1 to 7.

10. A computer program product comprising instructions for verifying a communication, the instructions when executed by one or more processors of a computing device cause the computing device to carry out the method of any of claims 1 to 7.
